# EUROPEAN PATENT APPLICATION

(11) **EP 4 712 583 A1**
(43) Date of publication of application: **18.03.2026**
(21) Application number: 24200206.1
(22) Date of filing: 13.09.2024
(51) Int. Cl.: H04W 52/02, H04W 74/0833

(54) **METHOD FOR USING A USER EQUIPMENT WITH A MOBILE COMMUNICATION NETWORK AND/OR FOR AN ENERGY-SAVING OPERATION OF THE USER EQUIPMENT WITH THE MOBILE COMMUNICATION NETWORK, USER EQUIPMENT, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for using a user equipment with a mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated again, in a subsequent second point in time, from the energy-saving mode by means of a predefined uplink radiofrequency signal transmitted by the user equipment,
wherein, in the energy-saving mode, the specific base station entity refrains from transmitting system information block 1 (SIB1) and starts to transmit system information block 1 (SIB1) again regularly while activated from the energy-saving mode,
wherein the predetermined uplink radiofrequency signal corresponds to a specific uplink random access channel signal assigned to the specific base station entity based on the content of a selection indication parameter,
wherein, in order to operate the mobile communication network, at least partly, in an energy-saving operation, the method comprises the following steps:
-- in a first step, the user equipment comprises or receives activation configuration information, the activation configuration information comprising a plurality of pieces of assignment information, different pieces of assignment information being related to different contents of the selection indication parameter, wherein a specific piece of assignment information indicates a specific uplink random access channel signal as being assigned to a specific content of the selection indication parameter,
-- in a second step, the user equipment transmits, based on the specific content of the selection indication parameter in one of the pieces of assignment information, the corresponding specific uplink random access channel signal in order to activate the specific base station entity from the energy-saving mode.

## Description

### BACKGROUND

The present invention relates a method for using a user equipment with a mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated again, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 again regularly while activated from the energy-saving mode.

Furthermore, the present invention relates to a user equipment for being used with a mobile communication network and/or for an energy-saving operation of the mobile communication network, wherein the user equipment communicates with the mobile communication network using a radio access network of the mobile communication network that comprises a plurality of base station entities, wherein a specific base station entity is operated in an energy-saving mode and wherein the specific base station entity is activated again from the energy-saving mode by means of a predefined uplink radiofrequency signal transmitted by the user equipment, wherein, in the energy-saving mode, the specific base station entity refrains from transmitting system information block 1 and starts to transmit system information block 1 again regularly while activated from the energy-saving mode.

Additionally, the present invention relates to a system or mobile communication network for using a user equipment with the mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated again, in a subsequent second point in time, from the energy-saving mode by means of a predefined uplink radiofrequency signal transmitted by the user equipment, wherein, in the energy-saving mode, the specific base station entity refrains from transmitting system information block 1,SIB1, and starts to transmit system information block 1, SIB1, again regularly while activated from the energy-saving mode,

Furthermore, the present invention relates to a program and to a computer-readable medium for using a user equipment with a mobile communication network and/or for an energy-saving operation of the user equipment with the mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).

Especially during periods of low usage of the mobile communication network, the situation exists that base station entities are not used at all, i.e. in at least one network cell or some network cells of the typically cellular mobile communication network, there are no mobile devices present at all that request a communication service from the mobile communication network. It would be desirable to reduce the power consumption of especially those base stations or base station entities in periods of low usage of the mobile communication network. Presently, it is possible to monitor the network usage, e.g. by means of an operations and maintenance/management center (OMC) controlling the mobile communication network. In case that low network usage (or absence of network usage) is detected in one network cell or in a plurality of network cells, it would be possible to switch off at least partly the corresponding network equipment such as base station entities or other network components.

In this respect, switching off of base station entities (or switching down) could especially mean that at least some parts of the system information (especially corresponding to system information block 1) that is, normally (i.e. while the base station entity is switched on), transmitted regularly in the corresponding radio cell (i.e. repeatedly with a comparatively small repetition period, i.e. comparatively often such as every couple of 10 ms, e.g. every 80 ms) is not transmitted, thus saving the corresponding power or energy.

### SUMMARY

An object of the present invention is to provide a technically simple, effective, cost-effective, adapted, customized, and, especially, an energy-saving solution for using a user equipment with a mobile communication network having the base station entities of the mobile communication network only providing service when there is the necessity for it and in a manner such that the user experience - of a user or a user equipment used with a mobile communication network and/or for an energy-saving operation of the user equipment with the mobile communication network - is either enhanced or, at least, only reduced in the least possible way. A further object of the present invention is to provide a corresponding user equipment, a corresponding system or mobile communication network, and a corresponding program and computer-readable medium.

The object of the present invention is achieved by a method for using a user equipment with a mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated again, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 again regularly while activated from the energy-saving mode, wherein the predetermined uplink radiofrequency signal corresponds to a specific uplink random access channel signal assigned to the specific base station entity based on the content of a selection indication parameter, wherein, in order to operate the mobile communication network, at least partly, in an energy-saving operation, the method comprises the following steps:
-- in a first step, the user equipment comprises or receives activation configuration information, the activation configuration information comprising a plurality of pieces of assignment information, different pieces of assignment information being related to different contents of the selection indication parameter, wherein a specific piece of assignment information indicates at least one specific uplink random access channel signal as being assigned to a specific content of the selection indication parameter,
-- in a second step, the user equipment transmits, based on the specific content of the selection indication parameter in one of the pieces of assignment information, the corresponding specific uplink random access channel signal in order to activate the specific base station entity from the energy-saving mode.

It is thereby advantageously possible according to the present invention to realize and enable a more adapted, more customized and energy-saving way of having only that specific base station entity transmit the system information block 1 that is actually needed to provide service to the user equipment. According to the present invention, this is advantageously accomplished by having the user equipment either comprise or receive an activation configuration information which in turn comprises information on the specific uplink random access channel signals that are to be used for an activation of the transmission of system information block 1 depending on selection indication parameters that are either related to the mobile communication network or to the user equipment or to both. This enables the user equipment to select the specific base station entity (or type thereof) to be activated in order to provide service at a particular time or for a particular use case, while other base stations or base station entities, which are not needed at that particular time or for that particular use case, are operated without transmission of the system information block 1, i.e. in the energy-saving mode.

Thereby, it is advantageously possible to achieve an overall reduction of power consumption of the mobile communication network as it is possible to, firstly, prevent the energy that would otherwise be needed to transmit the system information block 1 from being wasted, and, secondly, reduce the operation time and/or power consumption of essential and auxiliary base station components such as amplifier circuits and cooling entities.

According to the present invention, it is possible and preferred that an adapted way of activating the specific base station is executed indirectly or via a chain of activation steps, each activation step possibly being executed by a different base station or base station entity out of a set of base stations or base station entities or being executed by a different functional part out of a set of functional parts of the radio access network or out of a set of functional parts of a core network of the mobile communication network.

In a further embodiment of the present invention, it is possible and preferred that the specific uplink random access channel signal is transmitted by the user equipment to a plurality of base station entities or to a set of base station entities, each of which being configured to be activated by the specific uplink random access channel, and, nevertheless, as a consequence of the transmission only one base station entity out of the plurality or the set of base station entities is activated depending on a further selection criterion, the further selection criterion especially depending on received signal amplitude or received signal strength, wherein especially the base station that received the highest signal amplitude or highest signal strength is activated.

Furthermore, it is also preferred according to the present invention that the mobile communication network comprises at least a further base station entity, wherein the further base station entity is adjacent to (or in the vicinity of) the specific base station entity, wherein the further base station entity is operated, in another first point in time, in the energy-saving mode and wherein the further base station entity is activated again, in another subsequent second point in time, from the energy-saving mode by means of a further predefined uplink radiofrequency signal transmitted by the user equipment, wherein especially the further predefined uplink radiofrequency signal transmitted by the user equipment differs from the predefined uplink radiofrequency signal.

According to the present invention, it is furthermore possible and preferred that the plurality of pieces of assignment information comprises the information that a content of a single selection indication parameter, especially a single alphanumerical value, is assigned to at least one specific uplink random access channel signal, preferably to one or to two specific uplink random access channel signals, wherein the single selection indication parameter is related to the mobile communication network, especially to the specific base station entity, and/or to the user equipment.

Furthermore, it is also preferred according to the present invention that the plurality of pieces of assignment information comprises the information that the contents of a set of, preferably two, selection indication parameters, especially a set of alphanumerical values, is assigned to at least one specific uplink random access channel signal, preferably to one or to two specific uplink random access channel signals, wherein the set of selection indication parameters is either related to the mobile communication network, especially to the specific base station entity, and/or to the user equipment.

According to the present invention, it is as well possible and preferred that the plurality of pieces of assignment information comprises the information that each individual content of an individual selection indication parameter out of a plurality of different selection indication parameters, especially a single alphanumerical value, is assigned to at least one specific uplink random access channel signal, preferably to one or to two specific uplink random access channel signals, wherein the single selection indication parameter is related to the mobile communication network, especially to the specific base station entity, and/or to the user equipment.

It is furthermore possible and preferred according to the present invention, that at least a subset of the plurality of pieces of assignment information corresponds to or is implemented as a table or tabular scheme containing each piece of assignment information as an individual table entry or table row, wherein especially the table or tabular scheme contains a plurality of columns one of which containing the values of the selection indication parameter and at least one other column containing the specific uplink random access channel signal, wherein especially the table or tabular scheme comprises an additional column containing a further specific uplink random access channel signal.

According to the present invention, it is possible and preferred that at least a subset of the plurality of pieces of assignment information corresponds to or is implemented as a, especially associative, data array, preferably a jagged data array, containing each piece of assignment information as a data array element or a subarray of the data array, wherein especially numerical indices or key values of the data array correspond to or are equal to the contents of the selection indication parameter.

Furthermore, it is also possible and preferred, according to the present invention, that the selection indication parameter is or corresponds to the physical cell identity parameter of base station entities, especially the physical cell identity parameter being broadcast, by the base station entities, wherein a different content of the selection indication parameter corresponds to a different set of values of the physical cell identity parameter and wherein each one of different assigned uplink random access channel signals correspond to all physical cell identity values comprised in the respective set of values of the physical cell identity parameter.

Thereby, it is advantageously possible to enable the user equipment to choose a particular base station entity, that is especially known before hand, such as the specific base station entity, to be activated, especially irrespective of other parameters or characteristic quantities of the mobile communication network or of the user equipment. This also allows for more complex activation schemes in which, instead of the specific base station entity, a further base station entity, especially a further base station entity that is adjacent or otherwise associated to the specific base station entity, is activated by the user equipment in order to trigger the execution of a chain of activation steps aimed towards activating the specific base station entity.

Furthermore, it is also possible and preferred, according to the present invention, that the selection indication parameter is or corresponds to a frequency indication parameter, especially the absolute radio frequency channel number, ARFCN, parameter, wherein a different content of the selection indication parameter corresponds to a different set of values of the frequency indication parameter and wherein each one of different assigned uplink random access channel signals correspond to all frequency indication values comprised in the respective set of values of the frequency indication parameter.

In a further embodiment of the present invention, it is possible and preferred that the user equipment, firstly, receives a reference signal that is transmitted by the specific base station entity and/or at least one further base station entity, especially using the synchronization signal block, SSB, preferably using the primary synchronization signal, PSS, and/or the secondary synchronization signal, SSS, and/or the physical broadcast channel, PBCS, and, secondly, the user equipment determines which frequency bands are provided by the specific base station entity and/or the at least one further base station entity in order to be able to, especially at a later point in time, choose to activate the specific base station entity and/or the at least one further base station entity with the respective and assigned uplink random access channel signal, especially depending on the necessity to use a particular frequency band by the user equipment.

Thereby, it is advantageously possible to enable the user equipment to choose a base station entity that is using a particular frequency band which is needed for a particular use case, e.g. the user equipment may choose a base station entity that is using a frequency band at a lower frequency when the user equipment is located within absorbing building walls or other absorbing or electromagnetically shielding structures, while it may choose a frequency band at a higher frequency when there is the need for high data transmission rates.

Furthermore, it is also possible and preferred, according to the present invention, that the selection indication parameter is or corresponds to a time indication parameter, especially the time within a day, wherein a different content of the selection indication parameter corresponds to a different set of values of the time indication parameter and wherein each one of different assigned uplink random access channel signals correspond to all time indication values comprised in the respective set of values of the time indication parameter.

Thereby, it is advantageously possible to enable the user equipment to choose to activate a particular base station entity during a particular operational time frame, e.g. the user equipment may choose to activate a base station entity that is only supposed or only permitted to be activated during a specific time of day.

Still furthermore, it is also possible and preferred, according to the present invention, that the selection indication parameter is or corresponds to an area indication parameter, especially a geographical area defined by the tracking areas, location areas, global navigation satellite system polygons, wherein a different content of the selection indication parameter corresponds to a different set of values of the area indication parameter and wherein each one of different assigned uplink random access channel signals correspond to all area indication values comprised in the respective set of values of the area indication parameter.

Thereby, it is advantageously possible to enable the user equipment to choose to activate a base station entity that is centred in and/or located on a specific area. The area indication values especially being geographical coordinates such as latitude and longitude.

Additionally, it is also possible and preferred, according to the present invention, that the selection indication parameter is or corresponds to a combination of two or more of the following:
-- the selection indication parameter is the physical cell identity parameter of base station entities, especially the physical cell identity parameter being broadcast, by the base station entities, wherein a different content of the selection indication parameter corresponds to a different set of values of the physical cell identity parameter and wherein each one of different assigned uplink random access channel signals correspond to all physical cell identity values comprised in the respective set of values of the physical cell identity parameter,
-- the selection indication parameter is a frequency indication parameter, especially the absolute radio frequency channel number, ARFCN, parameter, wherein a different content of the selection indication parameter corresponds to a different set of values of the frequency indication parameter and wherein each one of different assigned uplink random access channel signals correspond to all frequency indication values comprised in the respective set of values of the frequency indication parameter,
-- the selection indication parameter is a time indication parameter, especially the time within a day, wherein a different content of the selection indication parameter corresponds to a different set of values of the time indication parameter and wherein each one of different assigned uplink random access channel signals correspond to all time indication values comprised in the respective set of values of the time indication parameter,
-- an area indication parameter, especially a geographical area defined by the tracking areas, location areas, global navigation satellite system polygons, wherein a different content of the selection indication parameter corresponds to a different set of values of the area indication parameter and wherein each one of different assigned uplink random access channel signals correspond to all area indication values comprised in the respective set of values of the area indication parameter.

Thereby, it is advantageously possible to enable a configuration scheme and/or activation scheme, especially a scheme in which a particular base station with a corresponding physical cell identity may be configured differently for different frequency bands or operational time frames in order to be able to be activated.

According to the present invention, it is possible and preferred that the predetermined uplink radiofrequency signal corresponds to a random access channel, RACH, signal, especially a specific random access channel preamble, or to a physical random access channel, PRACH, signal, especially a specific physical random access channel preamble, wherein especially each such preamble corresponds to being transmitted, by the user equipment, at a specific point in time, especially a regularly repeating point in time, and to transmitting, by the user equipment, a radiofrequency signal being coded using a specific transmission parameter, especially a specific cyclic shift value.

A Random Access Channel, RACH, is present in mobile communication networks according to the 5G NR standard, according to the 4G/Long Term Evolution (LTE) standard and according the 3G/UMTS (WCDMA) standard. Besides being used to synchronize the uplink from the user equipment to the base station entity another purpose of the RACH is to obtain the necessary resource to perform a RRC connection request. Different physical random access channel preambles or PRACH preambles are preferably generated by applying cyclic shifting by specific values to Zadoff Chu sequences within the frequency domain.

According to the present invention, by means of transmitting a PRACH preamble the user equipment is able to activate the specific base station entity such that as a result of the activation (or reactivation) of the base station entity the system information block 1 is transmitted, especially broadcast, by the specific base station entity. This means that the user equipment actively seeks to attach to a network part or domain of a specific type by detecting only the a master information block as part of the system information, wherein especially the user equipment transmits a single PRACH preamble or a set of multiple PRACH preambles (if applicable at successive points in time) in order to activate the specific base station entity.

Thereby, it is advantageously possible to cause an activation of the specific base station by emitting the specific uplink random access channel signal in an efficient manner, i.e. taylored to the communication needs of the requesting user equipment.

According to the present invention, it is possible and preferred that the user equipment comprises or receives the activation configuration information by means of a configuration as part of the universal integrated circuit card or the embedded universal integrated circuit card of the user equipment and/or wherein the user equipment receives the activation configuration information by means of at least one out of the following:
-- by means of dedicated non-access stratum signaling, especially at registration of the user equipment and/or at location update of the user equipment,
-- by means of dedicated access stratum signaling, especially at registration of the user equipment and/or at location update of the user equipment,
-- by means of any radio resource control procedure during normal operation of the user equipment,
-- by broadcast of system information, especially using a specific system information block.

Thereby, it is advantageously possible to efficiently provide for a configuration of a user equipment, wherein especially the properties of the user equipment and the particular use case can be taken into account. For example, a stationary user equipment, especially with regards to loT applications, may be configured differently than a mobile user equipment such as a smart phone or a cell phone.

Furthermore, the present invention relates to a user equipment for being used with a mobile communication network and/or for an energy-saving operation of the mobile communication network, wherein the user equipment communicates with the mobile communication network using a radio access network of the mobile communication network that comprises a plurality of base station entities, wherein a specific base station entity is operated in an energy-saving mode and wherein the specific base station entity is activated again from the energy-saving mode by means of a predefined uplink radiofrequency signal transmitted by the user equipment, wherein, in the energy-saving mode, the specific base station entity refrains from transmitting system information block 1 and starts to transmit system information block 1 again regularly while activated from the energy-saving mode, wherein the user equipment is configured such that predetermined uplink radiofrequency signal corresponds to a specific uplink random access channel signal assigned to the specific base station entity based on the content of a selection indication parameter, wherein, in order to operate the mobile communication network, at least partly, in an energy-saving operation, the user equipment is configured such that:
-- the user equipment comprises or receives activation configuration information, the activation configuration information comprising a plurality of pieces of assignment information, different pieces of assignment information being related to different contents of the selection indication parameter, wherein a specific piece of assignment information indicates a specific uplink random access channel signal as being assigned to a specific content of the selection indication parameter,
-- the user equipment transmits, based on the specific content of the selection indication parameter in one of the pieces of assignment information, the corresponding specific uplink random access channel signal in order to activate the specific base station entity from the energy-saving mode.

Furthermore, the present invention relates to a system or mobile communication network for using a user equipment with the mobile communication network and/or for an energy-saving operation of the mobile communication network, wherein the mobile communication network comprises a radio access network comprising a plurality of base station entities, wherein a specific base station entity is operated, in a first point in time, in an energy-saving mode and wherein the specific base station entity is activated again, in a subsequent second point in time, from the energy-saving mode by means of a predefined uplink radiofrequency signal transmitted by the user equipment, wherein, in the energy-saving mode, the specific base station entity refrains from transmitting system information block 1 and starts to transmit system information block 1 again regularly while activated from the energy-saving mode, wherein the predetermined uplink radiofrequency signal corresponds to a specific uplink random access channel signal assigned to the specific base station entity based on the content of a selection indication parameter, wherein, in order to operate the mobile communication network, at least partly, in an energy-saving operation, the system of the mobile communication network is configured such that:
-- the user equipment comprises or the user equipment is provided with activation configuration information, the activation configuration information comprising a plurality of pieces of assignment information, different pieces of assignment information being related to different contents of the selection indication parameter, wherein a specific piece of assignment information indicates a specific uplink random access channel signal as being assigned to a specific content of the selection indication parameter,
-- the mobile communication network - especially its radio access network, and in order to activate the specific base station entity from the energy-saving mode - receives, from the user equipment, based on the specific content of the selection indication parameter in one of the pieces of assignment information, the corresponding specific uplink random access channel signal.

Additionally, the present invention relates to a program comprising a computer readable program code, which, when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform the inventive method.

Still additionally, the present invention relates to a Computer-readable medium comprising instructions which when executed on a computer and/or on a user equipment and/or on a network node of a mobile communication network, especially a base station entity, or in part on a user equipment and/or in part on the network node of the mobile communication network, especially a base station entity, causes the computer and/or the user equipment and/or the network node of the mobile communication network, especially the base station entity, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings

### BRIEF DESCRIPTION OF THE DRAWINGS

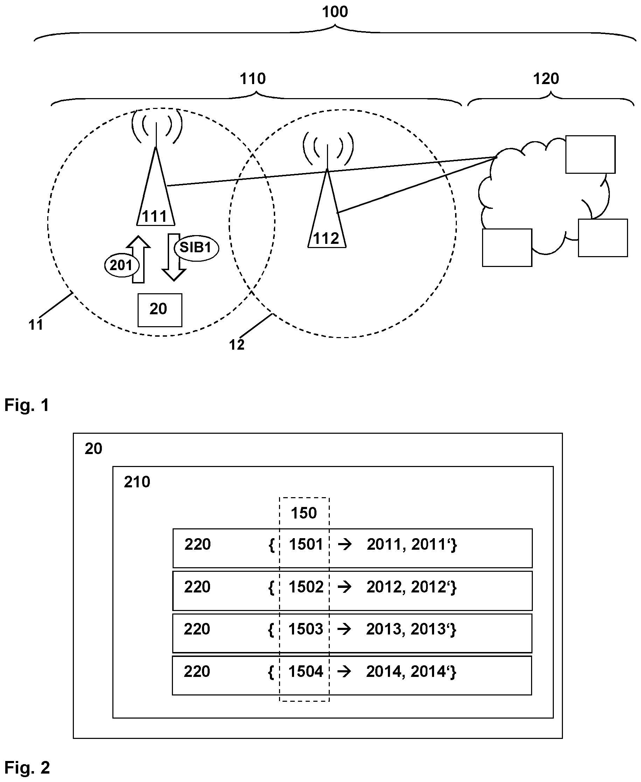

Figure 1 schematically illustrates the situation of a user equipment in a mobile communication network comprising a specific base station entity that is regularly transmitting a system information block 1 but may also be operated in an energy-saving mode from which it may be activated by the user equipment by the transmission of a predefined uplink radiofrequency signal.
Figure 2 schematically and exemplarily illustrates the activation configuration information as comprised in the user equipment or received by the user equipment. The activation configuration information comprises a plurality of pieces of assignment information, different pieces of assignment information being related to different contents of the selection indication parameter, the plurality of pieces of assignment information being implemented as a table or tabular scheme.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. The telecommunications network 100 or also mobile communication network 100 is typically realized as a cellular network or cellular mobile communication network 100. The mobile communication network 100, especially the core network 120, typically comprises a number of network functions or services that are not specifically indicated by means of a reference sign. The access network 110 or radio access network 110 comprises a plurality of radio cells 11, 12, i.e. geographical areas served, respectively, by base station entities. In the exemplary situation or scenario shown in Figure 1, a specific base station entity 111 generates or is associated with or spans the first (terrestrial) radio cell 11, and a further base station entity 112 generates or is associated with or spans the second (terrestrial) radio cell 12 (the first and second (terrestrial) radio cells 11, 12 being represented, in Figure 1, by means of dashed circles around the specific and further base station entities 111, 112, respectively). The specific and further base station entities 111, 112 typically realize gNB functionality or next-generation gNB functionality. The mobile communication network 100 is typically connected to a user equipment 20 (or, rather, the user equipment 20 is connected to the telecommunications network 100). The specific base station entity 111 is able to be operated in a first operational mode corresponding to a normal mode and in a second operational mode corresponding to an energy-saving mode. The conventional mode corresponds to the specific base station entity 111 transmitting radio frequency signals such that a system information block 1 SIB1 is received in the radio coverage area 11' of the specific base station entity 111 by the user equipment 20. This corresponds to the normal (and standardized) behaviour and situation of both the user equipment 20 and the specific base station entity 111 in which the system information block 1 SIB1 is transmitted in succession to the transmission of a master information block. Especially, in such a conventional (or normal) mode of the specific base station entity, at least a part of such system information - especially corresponding to system information block 1 SIB1 - is repeatedly transmitted, especially broadcast, by the specific base station entity in its corresponding radio coverage area, e.g. repeatedly every 80 ms or at a higher or lower repetition period. According to the present invention, the base station entity is able to be operated in the energy-saving mode which corresponds to the specific base station entity 111 refraining from transmitting the system information block 1 SIB1 (especially for periods of time longer (especially considerably longer, such as, e.g., at least, say, several hours) than a normal repetition period, or longer than even an increased repetition period). This means that at least during power saving time intervals the system information block 1 SIB1 is not provided in the radio coverage area 11' of the specific base station entity 111 as the transmitter chain of the specific base station entity 111 is at least partly switched off (or is partly deactivated) in the energy-saving mode. While the specific base station entity 111 is operated in the energy-saving mode, by transmission of a predefined uplink radiofrequency signal 201 corresponding to a specific uplink random access channel signal, the user equipment 20 is able to activate the specific base station entity 111 causing it to, upon and/or as a consequence of reception of the predefined uplink radiofrequency signal 201, switch back to the normal operational mode.

In Figure 2, the user equipment 20 comprising or having received an activation configuration information 210 is shown in a schematical representation. The activation configuration information 210 is either a part of the universal integrated circuit card or the embedded universal integrated circuit card of the user equipment 20 and/or has been received by the user equipment 20 by means of dedicated non-access stratum signaling, especially at registration of the user equipment 20 and/or by means of a location update of the user equipment 20 and/or by means of dedicated access stratum signaling, especially at registration of the user equipment 20 and/or by means of a location update of the user equipment 20 and/or by means of any radio resource control procedure during the normal mode of the user equipment 20 and/or by broadcast of system information, especially using a specific system information block. The activation configuration information 210 comprises plurality of pieces of assignment information 220 which are implemented, e.g., as a table or tabular scheme. Each assignment information 220 might correspond to a row of such a table or tabular scheme. The first column of the table or tabular scheme might comprise the contents 1501, 1502, 1503, 1504 or values of a selection indication parameter 150. The second column of the table or tabular scheme might comprise specific uplink random access channel signals 2011, 2012, 2013, 2014 - or indications thereto -, especially random access channel preambles, or RACH preambles, or especially physical random access channel preambles, or PRACH preambles, wherein especially different physical random access channel preambles or PRACH preambles are preferably generated by applying cyclic shifting by specific values to Zadoff Chu sequences within the frequency domain. Typically, the specific uplink random access channel signals 2011, 2012, 2013, 2014 - that are to be used as the predefined uplink radiofrequency signal 201 to be transmitted by the user equipment 20 indifferent cases or situations - are defined by means of (an indication or indications to) the time or time interval (i.e. when they are to be sent by the user equipment 20) and/or by means of (an indication or indications to) which cyclic shift value is to be used and/or by means of (an indication or indications to) which frequency or frequencies or frequency band(s) is to be used and/or by means of (an indication or indications to) one or a plurality of other radiofrequency signal parameters to be used. An optional further column (schematically represented in Figure 2) provides for the possibility to choose to activate a further base station entity 12 by using further specific uplink random access channel signals 2011', 2012', 2013', 2014', especially for the purpose of triggering a more complex activation process or scheme (e.g. a chain of activation steps aimed towards activating the specific base station entity 111). By means of the assignment information 220 given by the table or tabular scheme, the user equipment 20 is therefore able to, on the one hand, perform a selection of a particular base station - such as the specific base station 111 - that is to be activated, or, on the other hand, the user equipment 20 is able to trigger a more complex activation process or scheme such as the chain of activation steps aimed towards activating the specific base station entity 111. Each of said activation steps of such a more complex activation process or scheme may be executed by either a functional part or component of the radio access network 110 or by a functional part or component of the core network 120. In any of the situations or use cases described above, the selection indication parameter 150 may be or may correspond to the physical cell identity parameter, PCI, of base station entities, e.g. the specific base station entity 111 or the further base station entity 112, wherein especially the physical cell identity parameter being broadcast, by the base station entities, wherein a different content of the selection indication parameter 150 corresponds to a different set of values of the physical cell identity parameter and wherein each one of different assigned uplink random access channel signals 2011, 2012, 2013 correspond to all physical cell identity values comprised in the respective set of values of the physical cell identity parameter. In any of the situations or use cases described above, the selection indication parameter 150 may be or may correspond to a frequency indication parameter, especially the absolute radio frequency channel number, ARFCN, parameter, wherein a different content of the selection indication parameter 150 corresponds to a different set of values of the frequency indication parameter and wherein each one of different assigned uplink random access channel signals 2011, 2012, 2013 correspond to all frequency indication values comprised in the respective set of values of the frequency indication parameter. In any of the situations or use cases described above, the selection indication parameter 150 may be or may correspond to a time indication parameter, especially the time within a day, wherein a different content of the selection indication parameter 150 corresponds to a different set of values of the time indication parameter and wherein each one of different assigned uplink random access channel signals 2011, 2012, 2013 correspond to all time indication values comprised in the respective set of values of the time indication parameter. In any of the situations or use cases described above, the selection indication parameter 150 may be or may correspond to an area indication parameter, especially a geographical area defined by the tracking areas, location areas, global navigation satellite system polygones, wherein a different content of the selection indication parameter 150 corresponds to a different set of values of the area indication parameter and wherein each one of different assigned uplink random access channel signals 2011, 2012, 2013 correspond to all area indication values comprised in the respective set of values of the area indication parameter.

## Claims

1. Method for using a user equipment (20) with a mobile communication network (100) and/or for an energy-saving operation of the mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated again, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) again regularly while activated from the energy-saving mode,
wherein the predetermined uplink radiofrequency signal (201) corresponds to a specific uplink random access channel signal (2011) assigned to the specific base station entity (111) based on the content of a selection indication parameter (150),
wherein, in order to operate the mobile communication network (100), at least partly, in an energy-saving operation, the method comprises the following steps:
-- in a first step, the user equipment (20) comprises or receives activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- in a second step, the user equipment (20) transmits, based on the specific content (1501) of the selection indication parameter (150) in one of the pieces of assignment information (220), the corresponding specific uplink random access channel signal (2011) in order to activate the specific base station entity (111) from the energy-saving mode.

2. Method according to claim 1, wherein the selection indication parameter (150) is or corresponds to one of the following or to a combination of two or more of the following:
-- the selection indication parameter (150) is the physical cell identity parameter of base station entities, especially the physical cell identity parameter being broadcast, by the base station entities, wherein a different content of the selection indication parameter (150) corresponds to a different set of values of the physical cell identity parameter and wherein each one of different assigned uplink random access channel signals (2011, 2012, 2013) correspond to all physical cell identity values comprised in the respective set of values of the physical cell identity parameter,
-- the selection indication parameter (150) is a frequency indication parameter, especially the absolute radio frequency channel number, ARFCN, parameter, wherein a different content of the selection indication parameter (150) corresponds to a different set of values of the frequency indication parameter and wherein each one of different assigned uplink random access channel signals (2011, 2012, 2013) correspond to all frequency indication values comprised in the respective set of values of the frequency indication parameter,
-- the selection indication parameter (150) is a time indication parameter, especially the time within a day, wherein a different content of the selection indication parameter (150) corresponds to a different set of values of the time indication parameter and wherein each one of different assigned uplink random access channel signals (2011, 2012, 2013) correspond to all time indication values comprised in the respective set of values of the time indication parameter,
-- the selection indication parameter (150) is an area indication parameter, especially a geographical area defined by the tracking areas, location areas, global navigation satellite system polygones, wherein a different content of the selection indication parameter (150) corresponds to a different set of values of the area indication parameter and wherein each one of different assigned uplink random access channel signals (2011, 2012, 2013) correspond to all area indication values comprised in the respective set of values of the area indication parameter.

3. Method according to one of the preceding claims, wherein the predetermined uplink radiofrequency signal (201) corresponds to
-- a random access channel, RACH, signal, especially a specific random access channel preamble, or to
-- a physical random access channel, PRACH, signal, especially a specific physical random access channel preamble,
wherein especially each such preamble corresponds to being transmitted, by the user equipment (20), at a specific point in time, especially a regularly repeating point in time, and to transmitting, by the user equipment (20), a radiofrequency signal being coded using a specific transmission parameter, especially a specific cyclic shift value.

4. Method according to one of the preceding claims, wherein the user equipment (20) comprises or receives the activation configuration information (210) by means of a configuration as part of the universal integrated circuit card or the embedded universal integrated circuit card of the user equipment (20) and/or wherein the user equipment (20) receives the activation configuration information (210) by means of at least one out of the following:
-- by means of dedicated non-access stratum signaling, especially at registration of the user equipment (20) and/or at location update of the user equipment (20),
-- by means of dedicated access stratum signaling, especially at registration of the user equipment (20) and/or at location update of the user equipment (20),
-- by means of any radio resource control procedure during normal operation of the user equipment (20),
-- by broadcast of system information, especially using a specific system information block.

5. User equipment (20) for being used with a mobile communication network (100) and/or for an energy-saving operation of the mobile communication network (100), wherein the user equipment (20) communicates with the mobile communication network (100) using a radio access network (110) of the mobile communication network (100) that comprises a plurality of base station entities (111, 112), wherein a specific base station entity (111) is operated in an energy-saving mode and wherein the specific base station entity (111) is activated again from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) again regularly while activated from the energy-saving mode,
wherein the user equipment (20) is configured such that predetermined uplink radiofrequency signal (201) corresponds to a specific uplink random access channel signal (2011) assigned to the specific base station entity (111) based on the content of a selection indication parameter (150), wherein, in order to operate the mobile communication network (100), at least partly, in an energy-saving operation, the user equipment (20) is configured such that:
-- the user equipment (20) comprises or receives activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- the user equipment (20) transmits, based on the specific content (1501) of the selection indication parameter (150) in one of the pieces of assignment information (220), the corresponding specific uplink random access channel signal (2011) in order to activate the specific base station entity (111) from the energy-saving mode.

6. System or mobile communication network (100) for using a user equipment (20) with the mobile communication network (100) and/or for an energy-saving operation of the mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated again, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) again regularly while activated from the energy-saving mode,
wherein the predetermined uplink radiofrequency signal (201) corresponds to a specific uplink random access channel signal (2011) assigned to the specific base station entity (111) based on the content of a selection indication parameter (150),
wherein, in order to operate the mobile communication network (100), at least partly, in an energy-saving operation, the system of the mobile communication network (100) is configured such that:
-- the user equipment (20) comprises or the user equipment (20) is provided with activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- the mobile communication network (100) - especially its radio access network (110), and in order to activate the specific base station entity (111) from the energy-saving mode - receives, from the user equipment (20), based on the specific content (1501) of the selection indication parameter (150) in one of the pieces of assignment information (220), the corresponding specific uplink random access channel signal (2011).

7. Program comprising a computer readable program code, which, when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according to one of claims 1 to 4.

8. Computer-readable medium comprising instructions which when executed on a computer and/or on a user equipment (20) and/or on a network node of a mobile communication network (100), especially a base station entity (111, 112), or in part on a user equipment (20) and/or in part on the network node of the mobile communication network (100), especially a base station entity (111, 112), causes the computer and/or the user equipment (20) and/or the network node of the mobile communication network (100), especially the base station entity (111, 112), to perform a method according to one of claims 1 to 4.

## Amended claims

### Amended claims in accordance with Rule 137(2) EPC.

1. Method for using a user equipment (20) with a mobile communication network (100) and/or for an energy-saving operation of the mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated again, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) again regularly while activated from the energy-saving mode,
wherein the predetermined uplink radiofrequency signal (201) corresponds to a specific uplink random access channel signal (2011) assigned to the specific base station entity (111) based on the content of a selection indication parameter (150), wherein, in order to operate the mobile communication network (100), at least partly, in an energy-saving operation, the method comprises the following steps:
-- in a first step, the user equipment (20) comprises or receives activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- in a second step, the user equipment (20) transmits, based on the specific content (1501) of the selection indication parameter (150) in one of the pieces of assignment information (220), the corresponding specific uplink random access channel signal (2011) in order to activate the specific base station entity (111) from the energy-saving mode.

2. Method according to claim 1, wherein the selection indication parameter (150) is or corresponds to one of the following or to a combination of two or more of the following:
-- the selection indication parameter (150) is the physical cell identity parameter of base station entities, especially the physical cell identity parameter being broadcast, by the base station entities, wherein a different content of the selection indication parameter (150) corresponds to a different set of values of the physical cell identity parameter and wherein each one of different assigned uplink random access channel signals (2011, 2012, 2013) correspond to all physical cell identity values comprised in the respective set of values of the physical cell identity parameter,
-- the selection indication parameter (150) is a frequency indication parameter, especially the absolute radio frequency channel number, ARFCN, parameter, wherein a different content of the selection indication parameter (150) corresponds to a different set of values of the frequency indication parameter and wherein each one of different assigned uplink random access channel signals (2011, 2012, 2013) correspond to all frequency indication values comprised in the respective set of values of the frequency indication parameter,
**--** the selection indication parameter (150) is a time indication parameter, especially the time within a day, wherein a different content of the selection indication parameter (150) corresponds to a different set of values of the time indication parameter and wherein each one of different assigned uplink random access channel signals (2011, 2012, 2013) correspond to all time indication values comprised in the respective set of values of the time indication parameter,
**--** the selection indication parameter (150) is an area indication parameter, especially a geographical area defined by tracking areas, location areas, global navigation satellite system polygones, wherein a different content of the selection indication parameter (150) corresponds to a different set of values of the area indication parameter and wherein each one of different assigned uplink random access channel signals (2011, 2012, 2013) correspond to all area indication values comprised in the respective set of values of the area indication parameter.

3. Method according to one of the preceding claims, wherein the predetermined uplink radiofrequency signal (201) corresponds to
-- a random access channel, RACH, signal, especially a specific random access channel preamble, or to
-- a physical random access channel, PRACH, signal, especially a specific physical random access channel preamble,
wherein especially each such preamble corresponds to being transmitted, by the user equipment (20), at a specific point in time, especially a regularly repeating point in time, and to transmitting, by the user equipment (20), a radiofrequency signal being coded using a specific transmission parameter, especially a specific cyclic shift value.

4. Method according to one of the preceding claims, wherein the user equipment (20) comprises or receives the activation configuration information (210) by means of a configuration as part of the universal integrated circuit card or the embedded universal integrated circuit card of the user equipment (20) and/or wherein the user equipment (20) receives the activation configuration information (210) by means of at least one out of the following:
-- by means of dedicated non-access stratum signaling, especially at registration of the user equipment (20) and/or at location update of the user equipment (20),
-- by means of dedicated access stratum signaling, especially at registration of the user equipment (20) and/or at location update of the user equipment (20),
-- by means of any radio resource control procedure during normal operation of the user equipment (20),
-- by broadcast of system information, especially using a specific system information block.

5. User equipment (20) for being used with a mobile communication network (100) and/or for an energy-saving operation of the mobile communication network (100), wherein the user equipment (20) is configured to communicate with the mobile communication network (100) using a radio access network (110) of the mobile communication network (100) that comprises a plurality of base station entities (111, 112), wherein a specific base station entity (111) is configured to be operated in an energy-saving mode and wherein the specific base station entity (111) is configured to be activated again from the energy-saving mode by means of a predefined uplink radiofrequency signal (201) that the user equipment (20) is configured to transmit,
wherein, in the energy-saving mode, the specific base station entity (111) is configured to refrain from transmitting system information block 1 (SIB1) and is configured to start to transmit system information block 1 (SIB1) again regularly while activated from the energy-saving mode,
wherein the user equipment (20) is configured such that predetermined uplink radiofrequency signal (201) corresponds to a specific uplink random access channel signal (2011) assigned to the specific base station entity (111) based on the content of a selection indication parameter (150),
wherein, in order to operate the mobile communication network (100), at least partly, in an energy-saving operation, the user equipment (20) is configured such that:
-- the user equipment (20) comprises or receives activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- the user equipment (20) transmits, based on the specific content (1501) of the selection indication parameter (150) in one of the pieces of assignment information (220), the corresponding specific uplink random access channel signal (2011) in order to activate the specific base station entity (111) from the energy-saving mode.

6. System of a user equipment (20) and a mobile communication network (100), wherein the mobile communication network (100) comprises a radio access network (110) comprising a plurality of base station entities (111, 112), wherein a specific base station entity (111) is operated, in a first point in time, in an energy-saving mode and wherein the specific base station entity (111) is activated again, in a subsequent second point in time, from the energy-saving mode by means of a predefined uplink radiofrequency signal (201) transmitted by the user equipment (20),
wherein, in the energy-saving mode, the specific base station entity (111) refrains from transmitting system information block 1 (SIB1) and starts to transmit system information block 1 (SIB1) again regularly while activated from the energy-saving mode,
wherein the predetermined uplink radiofrequency signal (201) corresponds to a specific uplink random access channel signal (2011) assigned to the specific base station entity (111) based on the content of a selection indication parameter (150), wherein, in order to operate the mobile communication network (100), at least partly, in an energy-saving operation, the system of the mobile communication network (100) and the user equipment (20) is configured such that:
-- the user equipment (20) comprises or the user equipment (20) is provided with activation configuration information (210), the activation configuration information (210) comprising a plurality of pieces of assignment information (220), different pieces of assignment information (220) being related to different contents (1501, 1502, 1503) of the selection indication parameter (150), wherein a specific piece of assignment information (220) indicates at least one specific uplink random access channel signal (2011, 2011') as being assigned to a specific content (1501) of the selection indication parameter (150),
-- the mobile communication network (100) - especially its radio access network (110), and in order to activate the specific base station entity (111) from the energy-saving mode - receives, from the user equipment (20), based on the specific content (1501) of the selection indication parameter (150) in one of the pieces of assignment information (220), the corresponding specific uplink random access channel signal (2011).

7. Program comprising a computer readable program code, which, when executed on a on a user equipment (20) or on a network node of a mobile communication network (100), especially a base station entity (111, 112), or in part on a user equipment (20) and in part on the network node of the mobile communication network (100), especially a base station entity (111, 112), causes the user equipment (20) and/or the network node of the mobile communication network (100), especially the base station entity (111, 112), to perform a method according to one of claims 1 to 4.

8. Computer-readable medium comprising instructions which when executed on a user equipment (20) or on a network node of a mobile communication network (100), especially a base station entity (111, 112), or in part on a user equipment (20) and in part on the network node of the mobile communication network (100), especially a base station entity (111, 112), causes the user equipment (20) and/or the network node of the mobile communication network (100), especially the base station entity (111, 112), to perform a method according to one of claims 1 to 4.
